# DEMANDE DE BREVET EUROPEEN

(11) **EP 0 675 615 A1**
(43) Date de publication de la demande: **04.10.1995**
(21) Numéro de dépôt: 95400664.9
(22) Date de dépôt: 24.03.1995
(51) Int. Cl.: H04L 9/32, H04Q 7/32

(54) **Procédé d'authentification combinée d'un terminal de télécommunication et d'un module d'utilisateur dans un réseau de communication**

(30) Priorité: 29.03.1994 FR 9403685
(71) Demandeur: FRANCE TELECOM, F-75015 Paris (FR)
(72) Inventeur: Nevoux, Rola, F-78990 Elancourt (FR); Campana, Mireille, F-92140 Clamart (FR)
(74) Mandataire: Loisel, Bertrand

(57) **Abrégé**

Le terminal (PA) et le module d'utilisateur (SIM) sont authentifiés de façon combinée sur la base d'une clé d'authentification calculée d'une part par le terminal et d'autre part par le réseau. Une clé de session est d'abord calculée par le module d'utilisateur sur la base d'une clé secrète d'utilisateur (Ku), d'un paramètre d'identification du terminal (IMTI) et d'un premier nombre aléatoire. Le calcul de la clé d'authentification par le terminal fait intervenir cette clé de session calculée par le module d'utilisateur, une clé secrète d'identification du terminal (D) et un second nombre aléatoire. Le réseau calcule de la même manière la clé de session et la clé d'authentification en retrouvant les clés secrètes (Ku,D) sur la base des paramètres d'identification (IMUI,IMTI) transmis par le terminal. Les terminaux (PA) peuvent ensuite être authentifiés par le réseau indépendamment des modules d'utilisateurs (SIM) associés.

## Description

La présente invention concerne un procédé pour contrôler l'accès à un réseau de télécommunications au moyen d'un terminal fonctionnant avec un module d'utilisateur. Elle trouve une application dans tout système de communication nécessitant une authentification des terminaux.

On connaît, par exemple d'après EP-A-0 552 392, des procédures permettant d'authentifier mutuellement un module d'utilisateur et un terminal. Ces procédures permettent à l'utilisateur de. s'assurer de l'authenticité du terminal auquel il présente son module. En revanche, elles ne renseignent pas le réseau sur l'authenticité du terminal ou du module.

Le réseau de communication a besoin de connaître et de vérifier l'identité des utilisateurs pour assurer un bon acheminement des communications et pour permettre la facturation. Le plus souvent, comme par exemple dans le cas du radiotéléphone cellulaire européen (GSM), chaque terminal est associé à un utilisateur unique, et l'authentification des terminaux et des utilisateurs est confondue.

Actuellement, le concept de mobilité personnelle se développe, et on souhaite permettre aux terminaux d'être partagés par plusieurs utilisateurs. Ceci implique une séparation entre la gestion des utilisateurs et celle des terminaux.

Dans le schéma actuellement appliqué au réseau GSM, l'authentification porte uniquement sur les modules d'utilisateur. Le terminal ne contient pas de données de sécurité propres. Le retrait du module d'utilisateur implique l'absence des données d'authentification liées au terminal. Ce dernier devient alors amorphe et n'est plus joignable. Lorsqu'il se déplace, notamment lors d'une procédure de mise à jour de localisation, c'est le module d'utilisateur (SIM) qui est authentifié (voir l'article "Une application de la carte à microprocesseur : le module d'identité d'abonné du radiotéléphone numérique européen" de P. Jolie et al paru dans l'Echo des Recherches N° 139, 1er trimestre 1990, pages 13 à 20). De plus, si on envisage que le terminal puisse être partagé par plusieurs utilisateurs pour la réception des communications, il devient possible que plusieurs utilisateurs soient enregistrés sur un même terminal lors d'une mise à jour de localisation. Il se peut que le terminal ne dispose pas physiquement d'un module d'utilisateur lors d'une mise à jour de localisation ; dans ce cas, l'authentification est impossible et la mise à jour de localisation échoue, étant observé que les terminaux doivent être dans l'impossibilité d'utiliser des ressources radio sans être associés à des utilisateurs.

Au vu de ce qui précède, un but principal de la présente invention est de fournir une procédure souple pour l'authentification combinée d'un module d'utilisateur et d'un terminal.

L'invention propose ainsi un procédé pour contrôler l'accès à un réseau de télécommunications au moyen d'un terminal fonctionnant avec un module d'utilisateur, dans lequel une clé de session est calculée, d'une part par le module d'utilisateur et d'autre part par le réseau, en fonction de données incluant une clé d'identification d'utilisateur stockée de façon secrète dans une mémoire du module d'utilisateur et un premier nombre aléatoire fourni par le réseau, le réseau retrouvant la clé d'identification d'utilisateur sur la base d'un paramètre d'identification d'utilisateur émis par le terminal, caractérisé en ce que le terminal calcule une clé d'authentification en fonction de données incluant la clé de session calculée par le module d'utilisateur, une clé d'identification de terminal stockée de façon secrète dans une mémoire du terminal et un second nombre aléatoire fourni par le réseau, en ce que le réseau calcule de la même manière la clé d'authentification en fonction de données incluant la clé de session calculée par le réseau, la clé d'identification de terminal retrouvée par le réseau sur la base d'un paramètre d'identification de terminal émis par le terminal et le second nombre aléatoire, et en ce qu'on autorise le terminal à accéder au réseau en cas de concordance entre les clés d'authentification calculées par le terminal et par le réseau.

La clé de session sert à contrôler les modules d'utilisateur, tandis que la clé d'authentification sert à contrôler de façon combinée les modules d'utilisateur (via la clé de session) et les terminaux. Ce mode de contrôle d'accès offre une grande souplesse. En particulier, les terminaux et les utilisateurs peuvent être gérés par des entités différentes. Ainsi, lorsque le réseau comporte un système d'accès et une ou plusieurs unités de gestion des utilisateurs, les calculs de clé de session sont effectués au niveau de l'unité de gestion des utilisateurs (sous le contrôle du fournisseur de service), tandis que les calculs de clé d'authentification sont effectués au niveau du système d'accès (sous le contrôle de l'opérateur de réseau).

De préférence, le terminal mémorise le paramètre d'identification d'utilisateur et la clé de session calculée par le module d'utilisateur, et le réseau mémorise le paramètre d'identification d'utilisateur et le paramètre d'identification de terminal reçus du terminal ainsi que la clé de session calculée par le réseau. De cette façon, l'association physique du module d'utilisateur au terminal n'est plus indispensable lorsqu'une procédure d'authentification ultérieure est effectuée, puisqu'il n'est plus nécessaire de recalculer à chaque fois une clé de session. Cet avantage est particulièrement important pour les réseaux radiotéléphoniques cellulaires, pour lesquels des procédures d'authentification sont en général effectuées lors de chaque mise à jour de localisation d'une station mobile.

Avec le procédé selon l'invention, on peut envisager d'"inscrire" plusieurs utilisateurs sur un même terminal. L'accès au réseau par le terminal peut être autorisé pour chacun des modules d'utilisateur successivement présentés au terminal, sans évincer les utilisateurs précédents. On prévoit alors que le terminal mémorise les paramètres d'identification d'utilisateur relatifs à chacun des modules qui lui ont été présentés successivement, et au moins une clé de session calculée pour l'un de ces modules, et que le réseau mémorise les paramètres d'identification d'utilisateur relatifs à chacun de ces modules, le paramètre d'identification du terminal et au moins la clé de session calculée par le réseau relativement audit module.

D'autres particularités et avantages de la présente invention apparaîtront dans la description ci-après d'un exemple de réalisation préféré mais non limitatif, en référence aux dessins annexés, dans lesquels :
- la figure 1 est un schéma synoptique d'un réseau de radiotéléphonie cellulaire et d'une station mobile associée, pour la mise en oeuvre de l'invention ; et
- les figures 2 et 3 sont des diagrammes illustrant les étapes de procédures d'authentification effectuées conformément au procédé selon l'invention.

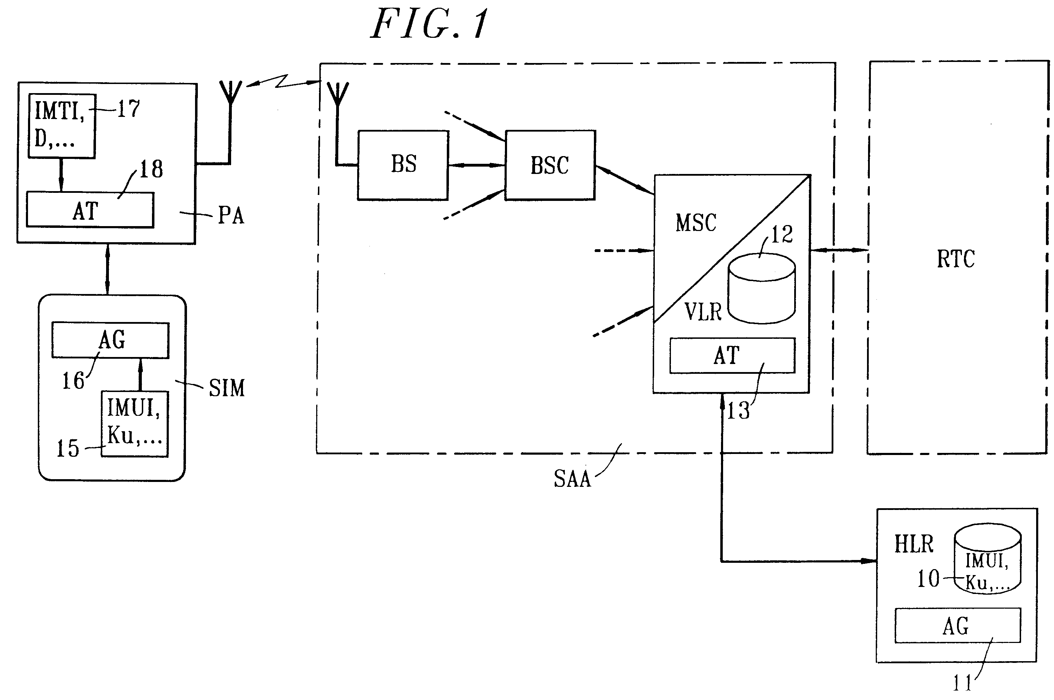

L'invention est décrite ci-après dans son application à un réseau cellulaire de radiotéléphonie. L'homme du métier comprendra que le procédé est aisément généralisable à d'autres types de réseaux de télécommunications. La figure 1 illustre l'architecture bien connue du réseau radiotéléphonique européen GSM. Pour une description générale de ce réseau, on pourra se référer à l'article "Le système cellulaire numérique européen de communication avec les mobiles" de B. Ghillebaert et al paru dans l'Echo des Recherches N° 131, 1er trimestre 1988, pages 5 à 16.

Le réseau cellulaire comprend un système d'accès SAA, et une ou plusieurs unités de gestion des utilisateurs HLR. Le système d'accès SAA est relié à un réseau téléphonique filaire RTC pour permettre aux utilisateurs mobiles de communiquer avec des abonnés du réseau filaire. Le système d'accès SAA comporte un certain nombre de stations de base BS réparties sur le territoire couvert, qui assurent l'interface radio avec les stations mobiles. Chaque station de base BS est commandée par un contrôleur de stations de base BSC relié à un centre de commutation du service mobile MSC.

Pour la gestion des utilisateurs, l'unité de gestion, ou enregistreur de localisation nominal HLR comporte une base de données 10 où sont stockées les informations nécessaires à la gestion des communications d'un certain nombre d'abonnés mobiles. La base de données 10 est associée à des circuits de traitement 11 qui assurent les calculs et les échanges de données servant à la gestion des communications. Le système d'accès SAA comprend en outre des enregistreurs de localisation des visiteurs VLR associés chacun à un ou plusieurs centres de commutation MSC. Un VLR comprend une base de données 12 contenant une copie des enregistrements des HLR pour tous les abonnés mobiles qui se trouvent dans les cellules dépendant du ou des centres de commutation MSC en question, et des circuits de traitement associés 13.

Une station mobile apte à communiquer avec le réseau cellulaire comprend un terminal PA associé à un module d'utilisateur SIM. Le module SIM se présente soit sous la forme d'une carte à mémoire, soit sous la forme d'un composant enfichable dans lequel sont stockées diverses données propres à l'utilisateur, parmi lesquelles son paramètre d'identification IMUI et sa clé secrète d'identification d'utilisateur Ku. La clé d'identification Ku est stockée dans une zone protégée de la mémoire 15 du module SIM. Elle est également stockée dans la base de données 10 du HLR de rattachement de l'utilisateur, en correspondance avec le paramètre d'identification IMUI. La clé Ku n'est jamais transmise entre deux composants fonctionnels intervenant dans une communication pour des raisons de sécurité. La gestion des paramètres IMUI et des clés secrètes Ku est donc assurée par l'opérateur du réseau qui a la responsabilité du HLR et qui délivre les modules d'utilisateur SIM. La mémoire 15 du module SIM est associée à des circuits de traitement 16 qui effectuent des calculs et assurent des échanges de données avec le terminal PA.

Pour la mise en oeuvre du procédé selon l'invention, le terminal PA comporte également une mémoire 17 dans laquelle sont stockées des données propres au terminal, parmi lesquelles le paramètre d'identification du terminal IMTI et la clé secrète d'identification du terminal D. La mémoire 17 est associée à des circuits de traitement 18 qui effectuent certains calculs intervenant dans la procédure d'authentification, et qui assurent des échanges de données d'une part avec le module SIM et d'autre part avec le système d'accès SAA. On peut prévoir que les clés secrètes D soient liées aux paramètres d'identification IMTI correspondants par une fonction secrète connue uniquement de l'opérateur du réseau, qui fait inscrire la clé D=f(IMTI) dans une zone protégée de la mémoire 17 de chaque terminal. Le réseau (VLR) est alors capable de retrouver la clé D relative à un terminal sur la base de son paramètre d'identification IMTI. Lorsqu'il est fait appel à une telle fonction secrète f, le réseau n'a pas besoin de disposer d'une base de données nominale de tous les terminaux disponibles ni de déterminer le réseau d'origine de chaque terminal.

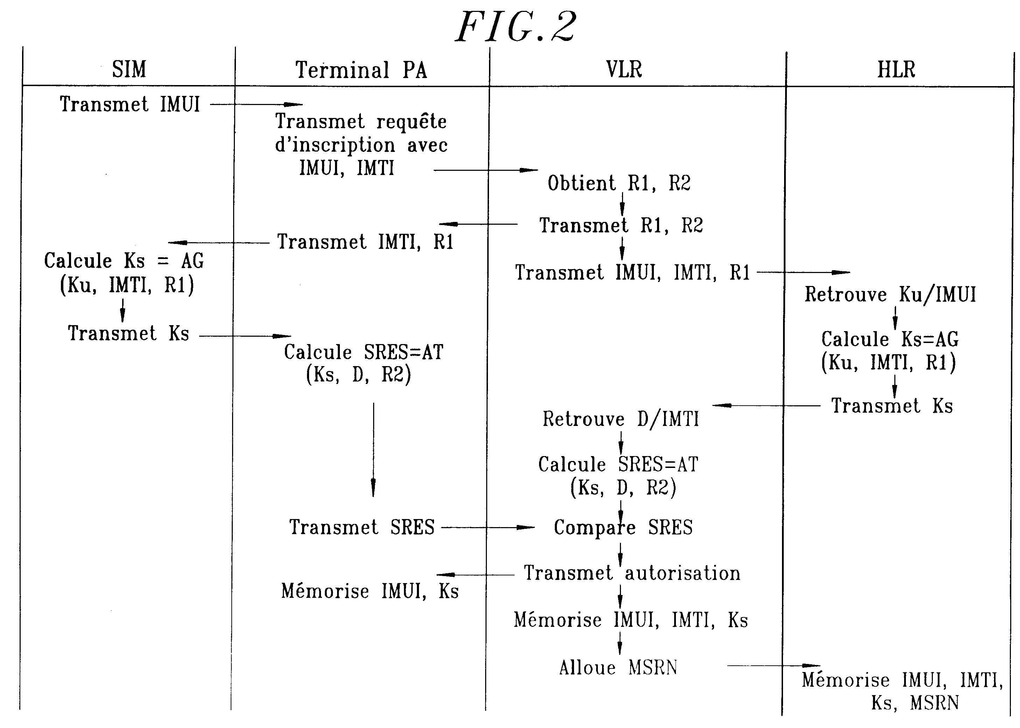

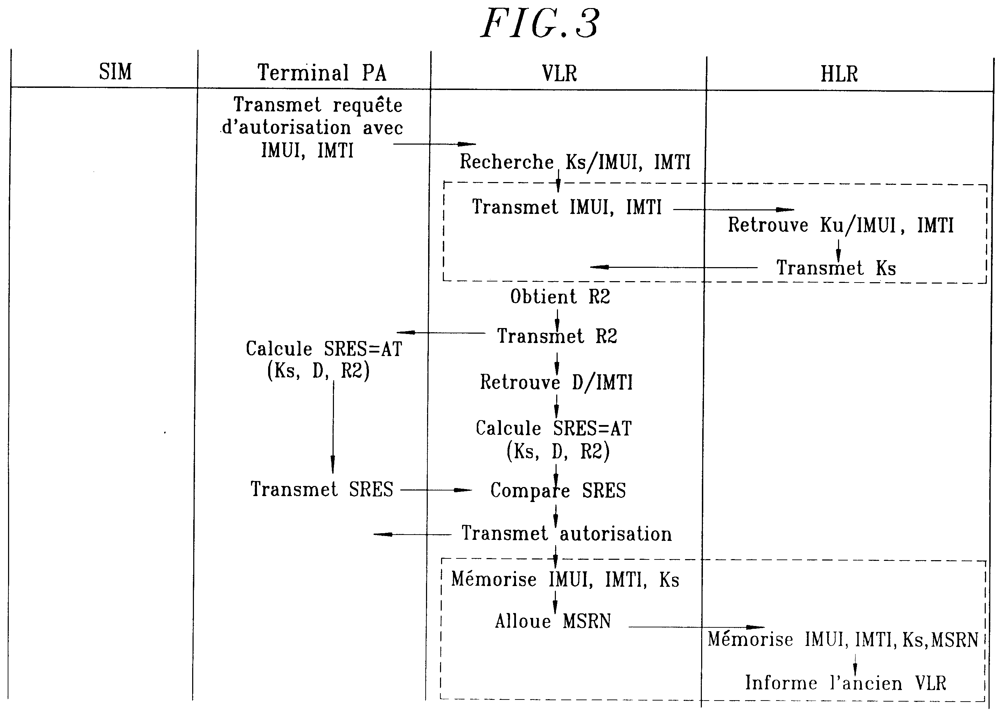

Le mode de communication entre les composants d'une station mobile et du réseau cellulaire est classique et ne sera pas détaillé davantage ici. On pourra à cet égard se reporter à l'article de B. GHILLEBAERT et al. cité précédemment. Seul le procédé de contrôle d'accès concerné par la présente invention sera décrit ci-après, en référence aux figures 2 et 3.

Le procédé de contrôle d'accès met en jeu deux fonctions cryptographiques distinctes AG et AT. La première fonction AG est appliquée au niveau des modules SIM et des unités de gestion HLR pour calculer des clés de session Ks. L'algorithme de la fonction AG est donc stocké à la fois dans les modules SIM (dans une zone protégée de la mémoire 15) et dans les HLR. La fonction AG n'est pas nécessairement identique pour tous les fournisseurs de service gérant des HLR. Dans le mode de réalisation décrit, la fonction AG a trois arguments : (i) la clé secrète d'identification Ku de l'utilisateur concerné, (ii) le paramètre d'identification IMTI du terminal concerné, et (iii) un nombre aléatoire R1 fourni par le réseau. La fonction AG peut bien entendu comporter d'autres arguments (par exemple le paramètre d'identification IMUI de l'utilisateur concerné), si on souhaite obtenir davantage de diversité dans les clés de session Ks.

La deuxième fonction cryptographique AT est appliquée pour calculer des clés d'authentification SRES d'une part au niveau des terminaux PA, et d'autre part au niveau du système d'accès SAA, plus précisément au niveau de l'enregistreur de localisation des visiteurs VLR concerné. L'algorithme de la fonction AT est donc stocké à la fois dans les terminaux (dans une zone protégée de la mémoire 17) et dans les VLR. Dans le mode de réalisation décrit, la fonction AT a trois arguments : (i) la clé de session Ks calculée au moyen de la première fonction AG, (ii) la clé secrète d'identification D du terminal concerné, et (iii) un second nombre aléatoire R2 fourni par le réseau. Bien entendu, la fonction AT peut comporter d'autres arguments (par exemple le paramètre d'identification IMTI du terminal concerné), si on souhaite obtenir davantage de diversité dans les clés d'authentification SRES.

Une procédure d'inscription et d'autorisation d'un utilisateur sur un terminal PA est illustrée sur la figure 2. Lorsque l'utilisateur présente son module SIM au terminal (ou à la mise sous tension du terminal physiquement associé au module SIM), le module SIM transmet au terminal PA le paramètre d'identification d'utilisateur IMUI stocké dans sa mémoire 15. Le terminal émet alors une requête d'inscription incluant le paramètre IMUI qu'il vient de recevoir du module SIM et son propre paramètre d'identification IMTI stocké dans sa mémoire 17. Le système d'accès SAA achemine la requête d'inscription jusqu'au VLR concerné. Le VLR génère alors deux nombres aléatoires R1, R2 et les transmet au terminal PA par l'intermédiaire du système d'accès. Le VLR informe également le HLR concerné de la requête d'inscription, et lui transmet les paramètres d'identification IMUI, IMTI et le premier nombre aléatoire R1.

Le terminal PA communique alors au module SIM son paramètre d'identification IMTI et le premier nombre aléatoire R1. Le module SIM calcule la clé de session Ks = AG(Ku,IMTI,R1), et la transmet au terminal PA. Le terminal calcule la clé d'authentification SRES en fonction de la clé de session Ks qu'il vient de recevoir du module SIM, de sa clé secrète d'identification D, et du second nombre aléatoire R2 : SRES = AT(Ks,D,R2). Cette clé d'authentification SRES est adressée par le terminal au VLR par l'intermédiaire du système d'accès.

Sur la base du paramètre d'identification d'utilisateur IMUI qu'il a reçu du VLR, le HLR retrouve dans sa base de données 10 la clé secrète Ku associée à ce paramètre IMUI. Il calcule alors la clé secrète Ks = AG(Ku,IMTI,R1), et la transmet au VLR. Sur la base du paramètre d'identification de terminal IMTI qu'il a reçu du terminal PA, le VLR retrouve la clé secrète associée D = f(IMTI). Il calcule alors la clé d'authentification SRES en fonction de la clé de session Ks qu'il a reçue du HLR, de la clé d'identification de terminal D qu'il a retrouvée, et du second nombre aléatoire R2 : SRES = AT(Ks,D,R2). Le VLR compare ensuite la clé d'autentification SRES qu'il a calculée lui-même à celle qu'il a reçue du terminal PA, pour déterminer si le terminal doit être autorisé à accéder au réseau. En cas de concordance entre les clés d'authentification, l'autorisation est donnée au terminal PA qui mémorise alors le paramètre d'identification de l'utilisateur IMUI et la clé de session Ks qu'il a reçue du module SIM. De son côté, le VLR mémorise les paramètres d'identification IMUI et IMTI, ainsi que la clé de session Ks qu'il a reçue du HLR, puis il alloue à la session IMUI/IMTI un numéro de réacheminement MSRN qu'il communique au HLR. Le HLR peut alors mémoriser les données relatives à l'utilisateur identifié par le paramètre IMUI, à savoir le paramètre d'identification du terminal IMTI, la clé de session Ks calculée par le HLR, et le numéro de réacheminement MSRN alloué par le VLR.

L'authentification porte donc à la fois sur le module d'utilisateur (à travers la clé de session Ks) et sur le terminal.

Une fois que la procédure d'inscription et d'authentification illustrée sur la figure 2 est terminée, l'utilisateur peut retirer son module SIM tout en restant inscrit sur le terminal PA. En cas d'appel extérieur destiné à cet utilisateur, le HLR est interrogé et retrouve le VLR concerné sur la base du numéro de réacheminement MSRN associé à cet utilisateur IMUI. Le VLR peut alors déterminer la station de base BS avec laquelle peut communiquer le terminal PA sur lequel est inscrit l'utilisateur. La communication peut être établie sans qu'une nouvelle clé de session Ks soit calculée, c'est-à-dire sans que l'utilisateur ait besoin de réintroduire son module SIM. Dans le cas d'un appel émanant de l'utilisateur mobile, on prévoit de préférence que celui-ci doive réintroduire son module SIM et que la procédure d'inscription et d'autorisation illustrée sur la figure 2 soit renouvelée.

Après l'inscription et l'autorisation de l'utilisateur IMUI et le retrait du module SIM de cet utilisateur, il est possible d'inscrire sur le même terminal un autre utilisateur IMUI'. La procédure appliquée est essentiellement la même que celle illustrée sur la figure 2. Une nouvelle clé de session Ks' et une nouvelle clé d'authentification SRES' sont calculées, et l'authentification est effectuée sur la base de la clé d'authentification SRES'. Lorsque l'autorisation est effective, le terminal PA mémorise les deux paramètres d'identification d'utilisateur IMUI, IMUI' et la clé de session Ks', et le VLR mémorise les deux paramètres d'identification d'utilisateur IMUI, IMUI', le paramètre d'identification du terminal IMTI, et la clé de session Ks'. La nouvelle clé de session Ks' est donc partagée entre les différents utilisateurs IMUI, IMUI' inscrits sur le terminal PA. Il est également possible de garder en mémoire les deux clés de session Ks et Ks', chaque utilisateur IMUI, IMUI' gardant alors sa propre clé de session. La procédure ci-dessous est applicable de la même façon pour l'inscription d'un nombre quelconque d'utilisateurs sur le même terminal.

La procédure d'authentification ultérieure applicable à l'initiative du réseau ou lors d'une mise à jour de localisation du terminal est illustrée sur la figure 3. Lorsque le terminal PA a déterminé qu'il doit changer de zone de localisation, il transmet au VLR concerné une requête d'autorisation incluant le paramètre d'identification de l'utilisateur inscrit IMUI, et le paramètre d'identification du terminal IMTI. Le VLR recherche alors dans sa base de données 12 s'il a stocké une clé de session Ks en relation avec les paramètres IMUI et IMTI.

Si le VLR ne trouve aucune clé de session en relation avec IMUI et IMTI, on est dans le cas d'une mise à jour de localisation avec changement de VLR de rattachement. Sur la base du paramètre d'identification d'utilisateur IMUI, le VLR est en mesure de déterminer le HLR gérant les communications de l'utilisateur. Il transmet à ce HLR les paramètres IMUI et IMTI. Le HLR concerné retrouve alors dans sa base de données 10 la clé de session Ks associée à l'utilisateur IMUI et au terminal IMTI, et transmet cette clé de session Ks au VLR. Le VLR génère alors un nombre aléatoire R2 qu'il transmet au terminal PA par l'intermédiaire du système d'accès. Le terminal PA calcule une clé d'authentification SRES en fonction de la clé de session Ks qu'il a précédemment mémorisée, de sa clé secrète d'identification D et du nombre aléatoire R2 qu'il vient de recevoir du VLR : SRES = AT(Ks,D,R2). Cette clé d'authentification SRES est transmise par le terminal PA au VLR. De son côté, le VLR retrouve la clé secrète d'identification du terminal D sur la base du paramètre IMTI qu'il a reçu. Il calcule alors la clé d'authentification SRES en fonction de la clé de session Ks qu'il a reçue du HLR, de la clé D qu'il vient de retrouver, et du nombre aléatoire R2 : SRES = AT (Ks,D,R2). Le VLR compare la clé d'authentification SRES qu'il vient de calculer à celle qu'il a reçue du terminal PA et, en cas de concordance, il donne l'autorisation de communiquer au terminal PA. Lorsque l'autorisation est effective, le VLR mémorise les paramètres d'identification IMUI, IMTI, et la clé de session Ks qu'il a reçue du HLR, puis il alloue un nouveau numéro de réacheminement MSRN à l'utilisateur. Ce numéro de réacheminement est transmis au HLR qui le mémorise en relation avec les paramètres d'identification IMUI, IMTI et la clé de session Ks. Le HLR informe finalement l'ancien VLR, dans lequel l'utilisateur était précédemment inscrit, qu'il peut effacer ses enregistrements relatifs à l'utilisateur IMUI et au terminal IMTI.

Dans le cas où le VLR trouve initialement une clé de session Ks associée au paramètre d'identification IMUI, IMTI, on est dans le cas d'une mise à jour de localisation sans changement de VLR. La procédure d'authentification appliquée est alors la même que celle illustrée sur la figure 3, sauf que les étapes représentées entourées par des traits interrompus n'ont pas besoin d'être effectuées. Dans ce cas, aucun échange de données entre le VLR et le HLR n'est nécessaire.

Les procédures d'authentification ultérieures illustrées sur la figure 3 sont applicables de façon semblable lorsque plusieurs utilisateurs IMUI, IMUI',... sont simultanément inscrits sur le même terminal PA.

Après l'inscription d'un ou plusieurs utilisateurs, le terminal peut donc être authentifié de façon autonome, indépendamment du ou des modules SIM associés (le module SIM n'est pas impliqué dans le diagramme de la figure 3). Cet avantage est particulièrement important pour les réseaux de radiocommunication nécessitant d'authentifier les terminaux lors de mises à jour de localisation.

On observera que le procédé décrit ci-dessus à titre d'exemple peut être aménagé pour tenir compte des contraintes propres à chaque type de réseau. Par exemple, on peut prévoir que les paramètres d'identification des utilisateurs et des terminaux IMUI, IMTI, qui n'ont pas le même degré de confidentialité que les clés secrètes Ku, D, ne soient pas transmis en clair sur l'interface radio entre les stations de base et les stations mobiles, cet interface étant accessible à tous. On peut notamment transmettre les paramètres d'identification sous une forme codée dépendant de la zone de localisation de la station mobile. Un exemple bien connu d'un tel mode de codage est appliqué dans le cas du GSM pour définir les identités temporaires d'abonné mobile (TMSI) des utilisateurs (voir Recommandations GSM N° 02.09, 02.17, 03.20 et 03.21).

On peut encore prévoir que les nombres aléatoires R1 intervenant dans le calcul des clés de session soient générés par les HLR et non par les VLR. En particulier, lorsque le VLR transmet une requête d'inscription au HLR avec les paramètres IMUI et IMTI (figure 2), le HLR peut générer plusieurs nombres aléatoires R1₁,...,R1ₙ et calculer les clés de sessions correspondantes Ks₁,...,Ksₙ. Il transmet alors plusieurs couples (R1ᵢ,Ksᵢ) au VLR qui sélectionne l'un d'entre eux pour le calcul de la clé d'authentification SRES. Lorsque la procédure d'inscription et d'autorisation est ultérieurement renouvelée (à l'initiative du réseau ou en cas d'appel émanant de la station mobile), le VLR peut utiliser un autre couple (R1ᵢ,Ksᵢ) sans avoir à s'adresser de nouveau au HLR. Cette disposition, appliquée de façon comparable dans le système GSM actuel, réduit avantageusement le nombre des échanges entre le VLR et le HLR.

## Revendications

1. Procédé pour contrôler l'accès à un réseau de télécommunications au moyen d'un terminal fonctionnant avec un module d'utilisateur (SIM), dans lequel une clé de session (Ks) est calculée, d'une part par le module d'utilisateur et d'autre part par le réseau, en fonction de données incluant une clé d'identification d'utilisateur (Ku) stockée de façon secrète dans une mémoire du module d'utilisateur et un premier nombre aléatoire (R1) fourni par le réseau, le réseau retrouvant la clé d'identification d'utilisateur (Ku) sur la base d'un paramètre d'identification d'utilisateur (IMUI) émis par le terminal, caractérisé en ce que le terminal calcule une clé d'authentification (SRES) en fonction de données incluant la clé de session (Ks) calculée par le module d'utilisateur, une clé d'identification de terminal (D) stockée de façon secrète dans une mémoire du terminal et un second nombre aléatoire (R2) fourni par le réseau, en ce que le réseau calcule de la même manière la clé d'authentification (SRES) en fonction de données incluant la clé de session (Ks) calculée par le réseau, la clé d'identification de terminal (D) retrouvée par le réseau sur la base d'un paramètre d'identification de terminal (IMTI) émis par le terminal et le second nombre aléatoire (R2), et en ce qu'on autorise le terminal à accéder au réseau en cas de concordance entre les clés d'authentification (SRES) calculées par le terminal et par le réseau.

2. Procédé selon la revendication 1, caractérisé en ce que, le réseau comportant un système d'accès (SAA) et au moins une unité de gestion des utilisateurs (HLR), les calculs de clés de session (Ks) par le réseau sont effectués au niveau de l'unité de gestion des utilisateurs, tandis que les calculs de clés d'authentification (SRES) par le réseau sont effectués au niveau du système d'accès.

3. Procédé selon l'une quelconque des revendications précédentes, caractérisé en ce que les données en fonction desquelles est calculée la clé de session (Ks) incluent en outre le paramètre d'identification du terminal (IMTI).

4. Procédé selon l'une quelconque des revendications précédentes, caractérisé en ce que le terminal mémorise le paramètre d'identification d'utilisateur (IMUI) et la clé de session (Ks) calculée par le module d'utilisateur, et en ce que le réseau mémorise le paramètre d'identification d'utilisateur (IMUI) et le paramètre d'identification de terminal (IMTI) reçus du terminal ainsi que la clé de session (Ks) calculée par le réseau.

5. Procédé selon l'une quelconque des revendications précédentes, caractérisé en ce que lorsque plusieurs modules d'utilisateur (SIM) ont été présentés successivement au terminal (PA), et que l'accès au réseau par le terminal a été autorisé pour chacun de ces modules d'utilisateurs, le terminal mémorise les paramètres d'identification d'utilisateur (IMUI, IMUI') relatifs à chacun de ces modules et au moins une clé de session (Ks') calculée par l'un de ces modules, et le réseau mémorise les paramètres d'identification d'utilisateur (IMUI, IMUI') relatifs à chacun de ces modules, le paramètre d'identification du terminal (IMTI) et au moins la clé de session (Ks') calculée par le réseau relativement audit module.

6. Procédé selon la revendication 4 ou 5, caractérisé par une procédure d'authentification ultérieure incluant les étapes suivantes :
- le terminal (PA) adresse au réseau son paramètre d'identification (IMTI) et le ou les paramètres d'identification d'utilisateur (IMUI) qu'il mémorise ;
- le réseau adresse au terminal un nombre aléatoire (R2) ;
- le terminal calcule une clé d'authentification (SRES) en fonction de données incluant la clé de session (Ks) qu'il a mémorisée, sa clé d'identification (D) et le nombre aléatoire (R2) qu'il vient de recevoir du réseau ; et le terminal adresse cette clé d'authentification (SRES) au réseau ;
- le réseau calcule de la même manière la clé d'authentification (SRES) en fonction de données incluant la clé de session (Ks) qu'il a mémorisée en relation avec les paramètres d'identification (IMTI, IMUI) reçus du terminal, la clé d'identification de terminal (D) retrouvée sur la base du paramètre d'identification du terminal (IMTI) et le nombre aléatoire (R2) ; et
- le réseau compare la clé d'authentification qu'il a reçue du terminal à celle qu'il a calculée pour autoriser le terminal à accéder au réseau en cas de concordance.
